Europäisches Patentamt

(19) European Patent Office

Office européen des brevets

(11) Veröffentlichungsnummer: **0 141 426**
**B1**

(12) **EUROPÄISCHE PATENTSCHRIFT**

(45) Veröffentlichungstag der Patentschrift:
18.05.88

(51) Int. Cl.⁴: **F 16 K 11/052,** F 16 K 11/085,
F 28 G 1/12

(21) Anmeldenummer: 84113442.2

(22) Anmeldetag: 07.11.84

(54) **Drehschieber.**

(30) Priorität: 09.11.83 DE 3340400

(43) Veröffentlichungstag der Anmeldung:
15.05.85 Patentblatt 85/20

(45) Bekanntmachung des Hinweises auf die Patenterteilung:
18.05.88 Patentblatt 88/20

(84) Benannte Vertragsstaaten:
AT BE CH DE FR GB IT LI NL

(56) Entgegenhaltungen:
EP-A-0 077 880
DE-A-3 147 511
FR-A-1 041 551
GB-A-335 111
US-A-3 973 592

(73) Patentinhaber: KALVO- VOGLER GMBH,
Holbeinstrasse 11, D-5650 Solingen 19 (DE)

(72) Erfinder: Vogler, Helmut Jürgen, Holbeinstrasse
11, D-5650 Solingen (DE)
Erfinder: Janssen, Peter Hendrikus, Schout van
Merwijckstraat 19, NL- 5981 EM Panningen (NL)

(74) Vertreter: Patentanwaltsbüro Cohausz & Florack,
Postfach 14 01 47, D-4000 Düsseldorf 1 (DE)

EP 0 141 426 B1

## Beschreibung

Die Erfindung betrifft einen Drehschieber, dessen zylindrischer Schieber mit seiner Drehachse quer zur Strömung gelagert und an einem feststehenden koaxialen Zylinder etwa gleicher Größe anliegt, dessen das Strömungsmittel durchlassende Öffnungen durch Öffnungen und Wandteile des Schiebers gesteuert sind, und der Schieber von einem einen größeren Durchmesser aufweisenden Außenzylinder koaxial umgeben ist, der auf gegenüberliegenden Seiten jeweils einen Ein- und Auslaß aufweist, so daß in Normalstellung des Schiebers der Einlaß der ersten Seite mit dem Auslaß der zweiten Seite und der Auslaß der ersten Seite mit dem Einlaß der zweiten Seite verbunden ist und in Umlenkstellung die Einlässe miteinander und die Auslässe miteinander verbunden sind, wobei in letzterer Stellung ein erster Strom durch eine erste Innenkammer des Schiebers und ein zweiter Strom durch eine in Axialrichtung daran angrenzende zweite Innenkammer des Schiebers fließt, deren Trennwand zur benachbarten Kammer etwa rechtwinklig zur Drehachse des Schiebers ist.

Ein solcher Drehschieber ist aus der DE-A-3 147 511 bekannt. Bei diesem bekannten Drehschieber ist in der Normalstellung der Ringraum zwischen Außenzylinder und Drehschieber bzw. festehendem Zylinder von dem Hin- und Rückstrom durchflossen, und in der Stellung, in der die Ströme sich kreuzen, fließt ein Strom durch eine erste Kammer des Schiebers und der zweite Strom durch eine zweite Kammer. Der Schieber liegt mit radialen Wandteilen an der Innenwandung des Außenzylinders an, d.h. der Schieber arbeitet mit dem Außenzylinder zusammen, so daß der Außenzylinder mit hoher Präzision gefertigt sein muß. Da am Außenzylinder die vier Anschlußstutzen befestigt sind, werden Schub- und Zugkräfte leicht von den Anschlußstutzen auf den Außenzylinder übertragen, so daß eine sichere Funktion des Drehschiebers nicht gewährleistet ist. Es kann sowohl zu Verschleißerscheinungen zwischen Drehschieber und Innenwandung des Außenzylinders als auch zu einem Verklemmen und Undichtigkeiten kommen. Auch wird in der kreuzenden Stellung der Drehschieber aufgrund der durch die beiden Kammern hindurchfließenden Wasserströme ungleichmäßig zu einer Kipplage hin balastet, so daß auch hierdurch Verschleiß und Verklemmen als auch Undichtigkeiten auftreten können und die Lager stark belastet werden.

Aus der US-A-3 973 592 ist ein Ventil mit einem kükenförmigen Stellglied bekannt. Zu seiner Funktion benötigt dieses Ventil im Innern neben dem Stellglied zusätzlich eine seitliche Kammer (78), die in radialer Richtung Platz benötigt und damit die für die Strömung benötigte Öffnung bzw. den Strömungsquerschnitt verkleinert, so daß ein hoher Druckverlust entsteht. Die Konstruktion ist darüber hinaus komplizierter und hat eine nicht genügende Abdichtung zwischen Vor- und Rücklauf.

Aufgabe der Erfindung ist es, einen Drehschieber der eingangs genannten Art derart zu verbessern, daß die Funktionssicherheit als auch die Dichtigkeit erhöht und der Verschleiß verringert werden.

Diese Aufgabe wird erfindungsgemäß dadurch gelöst, daß der Schieber den Außenzylinder nicht berührt und in beiden Drehstellungen die Ströme durch die Innenräume des Schiebers verlaufen, daß das Schieberinnere in Axialrichtung in drei Kammern unterteilt ist, von denen eine mittlere den ersten Strom und die beiden äußeren den zweiten Strom führen, und daß in einer Stellung, insbesondere der Umlenkstellung, alle drei Kammern und in der zweiten Stellung, insbesondere der Normalstellung, nur die mittlere Kammer durchflossen ist bzw. sind.

Dadurch, daß der Drehschieber nicht mehr mit den Außenzylindern, sondern nur noch mit dem feststehenden koaxialen inneren Zylinder zusammenarbeitet, wirken sich Veränderungen des Außenzylinders auf die Funktionstüchtigkeit, auf den Verschleiß und die Dichtigkeit nicht aus. Der Außenzylinder nimmt die von den Anschlußstutzen ausgeübten Kräfte auf und gibt sie nach innen nicht weiter, so daß der Außenzylinder nur noch eine Anschluß- und Schutzfunktion hat, während der innere walzenförmige Schieber in hoher Präzision mit dem inneren feststehenden Zylinder zusammenarbeitet und hierbei eine hohe Dichtigkeit erreicht und geringem Verschleiß unterliegt.

Besonders vorteilhaft ist es, daß das Schieberinnere in Axialrichtung in drei Kammern unterteilt ist, von denen eine mittlere den ersten Strom und die beiden äußeren den zweiten Strom führen. Hierdurch ist erreichbar, daß der Drehschieber durch die Mediumströme, insbesondere durch die Wasserströme, stets gleichmäßig belastet wird. Ein Verkippen um eine zur Drehachse senkrechte Achse wird mit hoher Sicherheit vermieden, und damit werden die Lager wenig belastet. Auch führt dies zu einer weiteren Erhöhung der Dichtigkeit und Verringerung des Verschleißes. Besonders vorteilhaft ist es, wenn die mittlere Kammer durch eine mittlere, zur Drehachse parallele oder durch diese verlaufende Trennwand in zwei Teilkammern unterteilt ist. Vorzugsweise wird vorgeschlagen, daß in der Normalstellung eine Teilkammer einen Strom und die zweite Teilkammer den zweiten Strom führt und in der Umlenkstellung beide Teilkammern zusammen einen der zwei Ströme führen.

Um in den beiden Drehstellungen des Schiebers gleich große Durchflußquerschnitte für beide Ströme zu erhalten, wird vorgeschlagen, daß in Achsrichtung gemessen die mittlere Kammer eine größere Höhe aufweist als eine der beiden äußeren Kammern. Ferner können hierzu die seitlichen Kammern etwa dieselbe Höhe haben und die mittlere Kammer etwa die doppelte Höhe einer äußeren Kammer haben.

Um sicherzustellen, daß alle Ströme stets nur durch den Innenraum des Schiebers fließen, wird vorgeschlagen, daß der Ringraum zwischen Schieber und Außenzylinder Trennwände aufweist, die ein Strömen des Mediums von den Anschlüssen in beiden Schieberstellungen verhindern.

Besonders vorteilhaft ist eine solche Drehschiebervorrichtung in den Leitungen zu einem Wärmetauscher verwendbar, der in seinen (Kondensator)Rohren frei bewegliche Bürsten aufweist, die mit Umkehrung des Wasserstroms hin- und herbeweglich sind und damit die Rohre des Wärmetauschers reinigen.

Ein Ausführungsbeispiel der Erfindung ist in den Zeichnungen dargestellt und wird im folgenden näher beschrieben. Es zeigen:

Fig. 1 einen waagerechten Schnitt durch die Vorrichtung in Normalstellung des Schiebers und mit angeschlossenem Wärmetauscher;

Fig. 2 einen Schnitt nach Fig. 1 in Umlenkstellung;

Fig. 3 einen senkrechten Schnitt durch die Vorrichtung quer zur Strömungsrichtung;

Fig. 4 einen Schnitt nach B-B in Fig. 3 in Normalstellung des Schiebers;

Fig. 5 einen Schnitt nach A-A in Fig. 3 in Normalstellung;

Fig. 6 einen Schnitt nach B-B in Umlenkstellung; und

Fig. 7 einen Schnitt nach A-A in Umlenkstellung.

Die ein Absperrorgan bildende Vorrichtung wird üblicherweise Drehschieber und genauer Walzenschieber genannt, obwohl der innen drehbar angeordnete Dichtkörper selber auch Drehschieber bzw. Walzenschieber genannt wird. Die Vorrichtung weist einen walzenförmigen bzw. zylindrischen Schieber 1 auf, der als Hohlzylinder ausgeführt ist und dessen Drehachse rechtwinklig zur Strömungsrichtung und insbesondere senkrecht ist. Der zylindrische Innenraum des Schiebers 1 ist durch zwei rechtwinklig zur Drehachse 2 angeordnete, insbesondere waagerechte Querwände 3, 4 in drei zylindrische Kammern unterteilt, wobei auch die Stirnseiten des Schieberzylinders durch Wände abgeschlossen sind. Die oberste erste Kammer 5 und die unterste dritte Kammer 6 weisen dieselbe Höhe auf, und die mittlere zweite Kammer 7 ist doppelt so hoch wie eine der beiden anderen Kammern 5, 6.

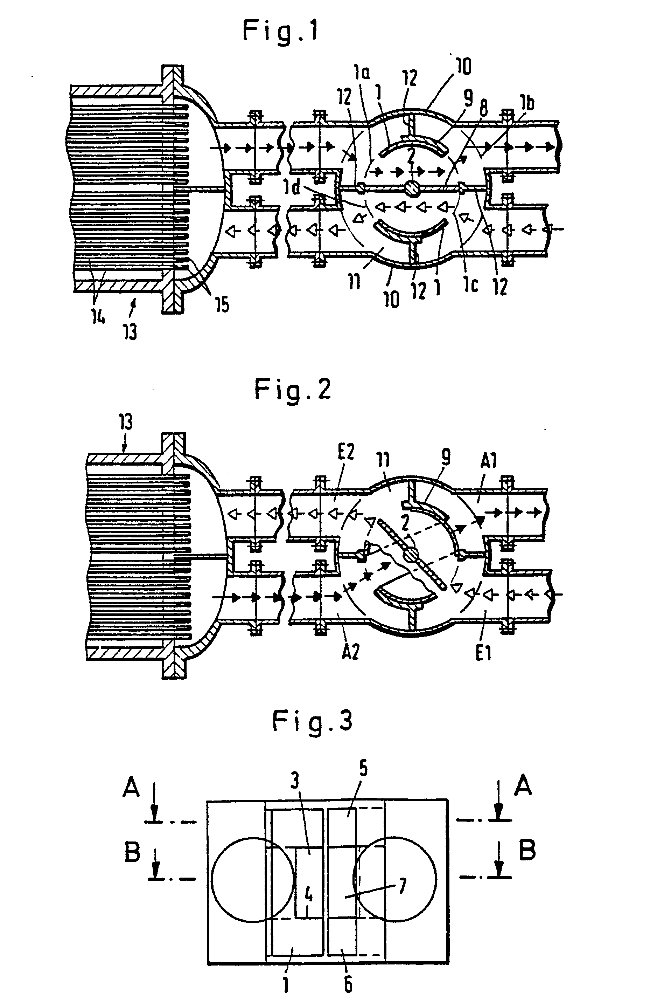

In der mittleren Kammer 7 ist eine insbesondere senkrechte Trennwand 8 durch die Drehachse 2 verlaufend befestigt, die in der in Fig. 1, 4 und 5 dargestellten Normalstellung parallel zu den beiden Strömungsrichtungen steht. Der Drehschieber 1 ist innerhalb eines inneren feststehenden Zylinders 9 gelagert, dessen Innendurchmesser nur wenig größer ist als der Außendurchmesser des Schiebers 1 und der von einem Außenzylinder 10 koaxial umgeben ist, der mit dem Zylinder 9 einen Ringraum 11 bildet, der durch radiale Trennwände 12 in vier gleich große Sektoren aufgeteilt ist. An jedem dieser vier sektorförmigen Ringteilräume 11a, 11b, 11c, 11d, die sich jeweils über 90 Grad erstrecken, ist ein Anschlußstutzen befestigt, wobei auf der ersten Seite ein Einlaß $E_1$ und dazu parallel ein Auslaß $A_1$ angeschlossen ist und auf der gegenüberliegenden zweiten Seite ein Einlaß $E_2$ und ein Auslaß $A_2$. Die Einlässe und Auslässe $A_1$ und $E_2$ als auch $E_1$ und $A_2$ fluchten miteinander.

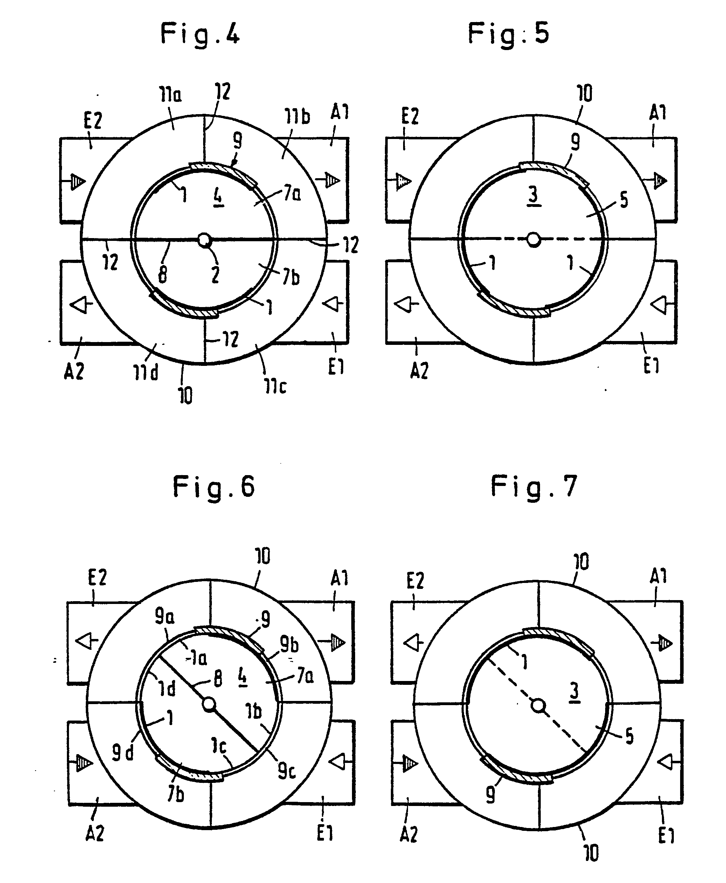

Der innere, feststehende Zylinder 9 weist in Höhe aller drei Kammern vier Öffnungen 9a, 9b, 9c, 9d auf, die den Zylinderinnenraum als auch den Schieberinnenraum jeweils mit den Ringräumen 11a bis 11d verbinden (Fig. 6). Diese Öffnungen 9a bis 9d werden durch den Schieber 1 gesteuert, wobei dieser in seiner zylindrischen Wandung Öffnungen 1a bis 1f aufweist, von denen die Öffnungen 1a-1d in Höhe der mittleren Kammer und die Öffnungen 1e und 1f jeweils in Höhe der oberen und unteren Kammer 5, 6 angeordnet sind. In der in Fig. 1, 4 und 5 dargestellten Normalstellung sind die obere Kammer 5 und die untere Kammer 6 durch den Schieber 1 geschlossen (Fig. 5) und die mittlere Kammer 7 geöffnet, wobei die in zwei Teilkammern 7a, 7b durch die Trennwand 8 unterteilte mittlere Kammer mit der ersten Teilkammer den Einlaß $E_1$ mit dem Auslaß $A_2$ verbindet und die zweite Teilkammer 7a den Einlaß $E_2$ mid den Auslaß $A_1$, so daß beide Ströme des Fluids oder Wassers zueinander parallel aneinander vorbeifließen.

Soll für eine meist nur kurze Zeit der Einlaß $E_1$ mit dem Einlaß $E_2$ und der Auslaß $A_2$ mit dem Auslaß $A_1$ verbunden werden, so daß die Ströme sich kreuzen, so wird durch einen Stellantrieb der Schieber 1 um 45° gedreht, wodurch der Teilraum 11a mit dem Teilraum 11c über beide Teilkammern 7a, 7b miteinander verbunden sind und somit das Fluid vom Einlaß $E_1$ durch die mittlere Kammer zum Einlaß $E_2$, der nunmehr Auslaß genannt werden kann, fließt. In dieser Drehstellung des Schiebers 1 werden auch die beiden anderen Kammern 5, 6 genutzt, da deren Öffnungen 1e, 1f durch den Schieber geöffnet werden und damit die Innenräume der Kammern 5, 6 mit den Teilringräumen 11d und 11b verbunden werden. Der halbe Fluidrückstrom fließt damit über die erste Kammer und die zweite Hälfte über die dritte Kammer von $A_2$ nach $A_1$ und kreuzt den durch die mittlere Kammer fließenden Hinstrom.

An dem Einlaß $E_2$ und dem Auslaß $A_2$ ist ein Wärmetauscher 13 angeschlossen, in dessen Kondensatorrohren 14 nicht dargestellte, frei bewegliche Reinigungsbürsten durch den Fluidstrom, insbesondere durch den Wasserstrom hin- und herbewegt werden und in Auffanghülsen 15 an den Enden der Kondensatorrohre ihre Bewegung stoppen. Durch ein kurzzeitiges Umkehren der Strömung durch den Wärmetauscher wird die Strömung in den Kondensatorrohren umgekehrt, und damit werden die in den Kondensatorrohren befindlichen Bürsten über die gesamte Länge der Rohre hindurchbewegt und nach Rückstellung des Schiebers 1 wieder zurückbewegt, wodurch Ablagerungen in den Rohren entfernt werden. Im Normalfall beträgt die Nennweite der Anschlußstutzen 50 -700 mm und der Durchmesser des Gehäuses (Außenzylinder) 400-2400 mm.

**Patentansprüche**

1. Drehschieber, dessen zylindrischer Schieber (1) mit seiner Drehachse quer zur Strömung gelagert und an einem feststehenden, koaxialen Zylinder (9) etwa gleicher Größe anliegt, dessen das Strömungsmittel durchlassende Öffnung (9a-9d) durch Öffnungen (1a-1f) und Wandteile des Schiebers (1) gesteuert sind, und der Schieber von einem einen größeren Durchmesser aufweisenden Außenzylinder (10) koaxial umgeben ist, der auf gegenüberliegenden Seiten jeweils einen Ein- und Auslaß (A1, A2, E1, E2) aufweist, so daß in Normalstellung des Schiebers der Einlaß (E1) der ersten Seite mit dem Auslaß (A2) der zweiten Seite und der Auslaß (A1) der ersten Seite mit dem Einlaß (E2) der zweiten Seite verbunden ist und in Umlenkstellung die Einlässe (E1, E2) miteinander und die Auslässe (A1, A2) miteinander verbunden sind, wobei in letzterer Stellung ein erster Strom durch eine erste Innenkammer (5) des Schiebers und ein zweiter Strom durch eine in Axialrichtung daran angrenzende zweite Innenkammer (7) des Schiebers fließt, deren Trennwand (8) zur benachbarten Kammer etwa rechtwinklig zur Drehachse (2) des Schiebers ist, dadurch gekennzeichnet , daß der Schieber (1) den Außenzylinder (10) nicht berührt und in beiden Drehstellungen die Ströme durch die Innenräume (5, 6, 7) des Schiebers verlaufen, daß das Schieberinnere in Axialrichtung in drei Kammern (5, 6, 7) unterteilt ist, von denen eine mittlere (7) den ersten Strom und die beiden äußeren (5, 6) den zweiten Strom führen und daß in einer Stellung insbesondere der Umlenkstellung alle drei Kammern (5, 6, 7) und in der zweiten Stellung insbesondere der Normalstellung, nur die mittlere Kammer (7) durchflossen ist bzw. sind.

2. Drehschieber nach Anspruch 1, dadurch gekennzeichnet , daß die mittlere Kammer (7) durch eine mittlere, zur Drehachse parallele oder durch diese verlaufende Trennwand (8) in zwei Teilkammern (7a, 7b) unterteilt ist.

3. Drehschieber nach Anspruch 2, dadurch gekennzeichnet , daß in der Normalstellung eine Teilkammer (7a) einen Strom und die zweite Teilkammer (7b) den zweiten Strom führt und in der Umlenkstellung beide Teilkammern zusammen einen der zwei Ströme führen.

4. Drehschieber nach einem der Ansprüche 1 bis 3, dadurch gekennzeichnet , daß in Achsrichtung gemessen die mittlere Kammer (7) eine größere Höhe aufweist als eine der beiden äußeren Kammern (5, 6).

5. Drehschieber nach Anspruch 4, dadurch gekennzeichnet , daß die seitlichen Kammern (5, 6) etwa dieselbe Höhe haben und die mittlere Kammer (7) etwa die doppelte Höhe einer äußeren Kammer (5, 6) hat.

6. Drehschieber nach einem der Ansprüche 1 bis 5, dadurch gekennzeichnet, daß der Ringraum (11) zwischen Schieber (1) und Außenzylinder (10) Trennwände (12) aufweist, die ein Strömen des Mediums von den Anschlüssen in beiden Schieberstellungen verhindern.

**Claims**

1. Plug valve, the cylindrical sliding plug (1) of which is mounted with its axis of rotation transverse to the flow and bearing against a fixed, coaxial cylinder (9) of about the same size, the opening (9a-9d) of which, allowing the passage of the flow medium, is controlled by openings (1a-1f) and wall parts of the sliding plug (1), and the sliding plug is coaxially surrounded by an outer cylinder (10) which is of larger diameter and has an inlet and outlet (A1, A2, E1, E2) on each of opposite sides, so that, in the normal position of the sliding plug, the inlet (E1) of the first side is connected to the outlet (A2) of the second side and the outlet (A1) of the first side is connected to the inlet (E2) of the second side and, in the deflection position, the inlets (E1, E2) are connected to each other and the outlets (A1, A2) are connected to each other, in this latter position a first stream flowing through the first inner chamber (5) of the sliding plug and a second stream flowing through an axially adjoining second inner chamber (7) of the sliding plug, the dividing wall (8) of which from the neighbouring chamber is approximately at right angles to the axis of rotation (2) of the sliding plug, characterized in that the sliding plug (1) does not touch the outer cylinder (10) and, in both directions of rotation, the streams run through the inner chambers (5, 6, 7) of the sliding plug, in that the inside of the sliding plug is axially sub-divided into three chambers (5, 6, 7), of which a middle chamber (7) conducts the first stream and the two outer chambers (5, 6) conduct the second stream, and in that in one position, in particular the deflection position, all three chambers (5, 6, 7) are passed through and, in the second position, in particular the normal position, only the middle chamber (7) is passed through.

2. Plug valve according to claim 1, characterized in that the middle chamber (7) is subdivided by a middle dividing wall (8), parallel to the axis of rotation or running through the latter, into two subchambers (7a, 7b).

3. Plug valve according to claim 2, characterized in that, in the normal position, one subchamber (7a) conducts one stream and the second subchamber (7b) conducts the second stream and, in the deflection position, both subchambers together conduct one of the two streams.

4. Plug valve according to one of claims 1 to 3, characterized in that the middle chamber (7) has a greater height, measured axially, than one of the two outer chambers (5, 6).

5. Plug valve according to claim 4, characterized in that the lateral chambers (5, 6) have approximately the same height and the middle chamber (7) has approximately twice the height of one of the outer chambers (5, 6).

6. Plug valve according to one of claims 1 to 5, characterized in that the annular space (11) between sliding plug (1) and outer cylinder (10) has dividing walls (12) which prevent a flowing of the medium from the connections in both sliding plug positions.

**Revendications**

1. Robinet à boisseau dont le boisseau cylindrique (1) est logé avec son axe de rotation transversal par rapport à l'écoulement et est adjacent à un cylindre (9) coaxial fixe sensiblement de même dimension, dont les ouvertures ( 9a - 9d) traversées par le fluide d'écoulement sont commandées par des ouvertures (1a - 1f) et des portions de paroi du boisseau (1), le boisseau étant entouré coaxialement par un cylindre extérieur (10) présentant un plus grand diamètre qui présente sur des faces opposées à chaque fois une entrée et une sortie ($A_1$, $A_2$, $E_1$, $E_2$), de sorte que, en position normale du boisseau, l'entrée ($E_1$) de la première face est reliée à la sortie ($A_2$) de la seconde face et la sortie ($A_1$) de la première face à l'entrée ($E_2$) de la seconde face et, en position d'inversion, les entrées ($E_1$, $E_2$) et les sorties ($A_1$, $A_2$) sont reliées les unes aux autres, un premier courant s'écoulant, dans cette dernière position, à travers une première chambre interne (5) du boisseau et un second courant à travers une seconde chambre interne (7) du boisseau adjacente à celle-ci en direction axiale, dont la paroi de séparation (8) est sensiblement orthogonale à l'axe de rotation (2) du boisseau vers la chambre adjacente, caractérisé par le fait que le boisseau (1) ne touche pas le cylindre extérieur (10) et, dans les deux positions angulaires les courants s'écoulent par les volumes internes (5, 6, 7) du boisseau, que l'intérieur du boisseau est divisé en direction axiale en trois chambres (5, 6, 7), parmi lesquelles la chambre médiane (7) conduit le premier courant et les deux chambres extérieures (5, 6) le second courant, et que dans une position, en particulier dans la position d'inversion, toutes les trois chambres (5, 6, 7) sont traversées, et dans une seconde position, en particulier la position normale, seule la chambre médiane (7) est traversée.

2. Robinet à boisseau selon la revendication 1, caractérisé par le fait que la chambre médiane (7) est divisée en deux chambres partielles (7a, 7b) par une paroi de séparation médiane (8) parallèle à l'axe de rotation ou passant par celui-ci.

3. Robinet à boisseau selon la revendication 2, caractérisé par le fait que dans la position intermédiaire, une chambre partielle conduit un courant et la seconde chambre partielle (7b) le second courant et que, dans la position d'inversion, les deux chambres partielles conduisent ensemble un des deux courants.

4. Robinet à boisseau selon l'une des revendications 1 à 3, caractérisé par le fait que la chambre médiane (7) présente une hauteur, mesurée dans la direction axiale, supérieure à celle des deux chambres extérieures (5, 6).

5. Robinet à boisseau selon la revendication 4, caractérisé par le fait que les chambres latérales (5, 6) ont sensiblement la même hauteur et la chambre médiane (7) une hauteur sensiblement double de celle des chambres extérieures (5, 6).

6. Robinet à boisseau selon l'une des revendications 1 à 5, caractérisé par le fait que l'espace annulaire (11) entre le boisseau (1) et le cylindre extérieur (10) présente des parois de séparation (12) qui empêchent un écoulement du fluide depuis les raccordements dans les deux positions du boisseau.

# Fig.1

# Fig.2

# Fig.3

## Fig.4

E2  11a  12  11b  A1  9  1  4  7a  12  12  8  2  7b  1  12  A2  11d  10  11c  E1

## Fig:5

E2  10  A1  9  3  5  1  1  A2  E1

## Fig.6

E2  10  A1  9a  9  9b  1a  1d  8  4  7a  1b  1  9c  9d  1c  7b  A2  E1

## Fig.7

E2  10  A1  1  3  5  9  10  A2  E1